Europäisches Patentamt

European Patent Office

Office européen des brevets

(19)

(11) Publication number: 0 093 455
A2

(12) # EUROPEAN PATENT APPLICATION

(21) Application number: 83104404.5

(22) Date of filing: 04.05.83

(51) Int. Cl.³: H 01 G 1/11

(30) Priority: 05.05.82 IT 2177682 U

(43) Date of publication of application:
09.11.83 Bulletin 83/45

(84) Designated Contracting States:
AT BE CH DE FR GB IT LI LU NL SE

(71) Applicant: DUCATI ELETTROTECNICA SpA
Via Marco E. Lepido 178
I-40132 Bologna(IT)

(72) Inventor: Matteuzzi, Paolo
Via Riccardina 76
I-40050 Mezzolara Bologna(IT)

(72) Inventor: Avioni, Carlo
Via Rimesse 51
I-40138 Bologna(IT)

(72) Inventor: Benfenati, Claudio
Via G. Bentini 32
I-40128 Bologna(IT)

(72) Inventor: Lamma, Giorgio
Via Romagnoli 40
I-40137 Bologna(IT)

(74) Representative: Patentanwälte Grünecker, Dr.
Kinkeldey, Dr. Stockmair, Dr. Schumann, Jakob, Dr.
Bezold, Meister, Hilgers, Dr. Meyer-Plath
Maximilianstrasse 58
D-8000 München 22(DE)

(54) Device for automatically disconnecting an electric capacitor in the case of a short circuit.

(57) A device for automatically disconnecting an electric capacitor in the case of a short circuit comprises a container for housing the capacitor therein, a cover for hermetically closing the container, terminals extending through the cover and rigidly connected thereto, and supply conductors extending between the terminals and the capacitor within the housing.

In known devices of the described type, the container is formed of metal and includes a deformable peripheral wall portion permitting the top and bottom portions of the container to be moved away from one another by an overpressure within the housing caused by the decomposition of a synthetic dielectric in the case of a short circuit. The formation of a deformable peripheral wall portion in a container made of a plastics material offers considerable difficulties.

The invention therfore provides that the cover (4) includes a central portion (5) carrying the terminals (8), a peripheral portion (6) affixed to the container (1), and a deformable intermediate portion (7) adapted to permit the central portion to move away from the container in an axial direction in the case of an overpressure developing within the container. This configuration permits the container and the cover to be made of a plastics material or any other suitable material.

./...

Fig. 1          Fig. 2

Device for Automatically Disconnecting an Electric
Capacitor in the Case of a Short Circuit

Description
——————————————

The present invention relates to a device for automatically disconnecting an electric capacitor in the case of a short circuit.

It is generally known that electric capacitors are subject to short
circuits due to degradadtion of their insulation. In the case of such
short circuit, the capacitor becomes obviously unservicable, so that
it is required to disconnect it promptly for protecting electric
components cooperating therewith.

Conventional capacitors with electrodes formed of metal foils are
characterized by very low short-circuit resistance and consequently
very high short-circuit currents, so that the disconnection of such
capacitors may be accomplished by means of fuses connected in series
with each capacitor. The rather high short-circuit current causes
the fuse to interrupt the connection of the capacitor substantially
instantaneously, thus avoiding damage to components connected thereto.

These problems have become more complicated with the recent introduction of capacitors with polypropylene insulators and metallized
electrode layers. The short-circuit resistance of such novel
capacitors is substantially increased, resulting in the reduction of
the short-circuit current to a level at which instantaneous disconnection by means of conventional fuses is no longer ensured.

For the solution of this problem, it has been proposed to utilize the
gas developed by the decomposition of the dielectric of the capacitor
caused by the passage therethrough of the short-circuit current. To
this effect, the capacitor is housed within a hermetically sealed
metal container having a deformable annular wall portion disposed
between a bottom portion housing the capacitor and a top portion
provided with terminal rigidly affixed thereto and connected to
the capacitor by supply conductors extending between the terminals and the capacitor. In an arrangement of this type, a short circuit results in an overpressure of the gas within the container, whereby the deformable annular wall portion permits the two container portions to move axially away from one another, causing at least one of the supply conductors to be broken, so that the circuit is instantaneously interrupted.

This solution has been found to be very efficient and is therefore employed to a large extent. It suffers, however, from certain limitations imposed by the employ of a metal container, as the employ of a container of a plastics material would be preferable for many applications. On the other hand, it is extremely simple to form the deformable annular wall portion of a metal container by suitably designing its peripheral wall, which cannot, however, be said of a container formed of a plastics material.

It is therefore an object of the present invention to provide a device for automatically disconnecting an electric capacitor in the case of a short circuit which makes use of the principle of the deformable metal container without excluding, however, the employ of a container of a different material, particularly of a plastics material.

To attain this object in a device for automatically disconnecting an electric capacitor in the case of a short circuit, comprising a container for housing the capacitor therein, a cover for hermetically closing the container, terminals extending through the cover and rigidly affixed thereto, and supply conductors extending between the terminals and the capacitor within the container, the invention provides that the cover includes a central portion carrying the terminals, a peripheral portion affixed to the container, and a deformable intermediate portion adapted to permit the central portion to move away from the container in an axial direction in the case of an overpressure within the container.

According to the invention, it is thus not the container itself, but its cover which includes a deformable portion. This signifies that the container may be of an extremely simple shape readily formed of a plastics material, while the problem of providing a deformable portion is restricted to the cover, the substantially planar configuration of which lends itself much better for this purpose. In particular, the cover itself may be formed of a plastics material (although not solely of such material), with a deformable portion formed as a simple annular web of reduced wall thickness and suitable shape. The entire hermetic sealing assembly may thus be formed of a plastics material as required for certain applications.

An exemplary embodiment of the invention shall now be described with reference to the accompanying drawings, wherein:

fig. 1 shows an axially sectioned view of a device according to the invention in the normal operative state of the capacitor, and

fig. 2 shows an axially sectioned view of the device after the occurrence of a short circuit.

The device shown in the drawing comprises a cylindric container 1 formed of a plastics material and provided with internal stop means 2 for retaining an electric capacitor 3 of the type having an insulator formed of a synthetic film material, e.g. polypropylene, and metallized electrode layers.

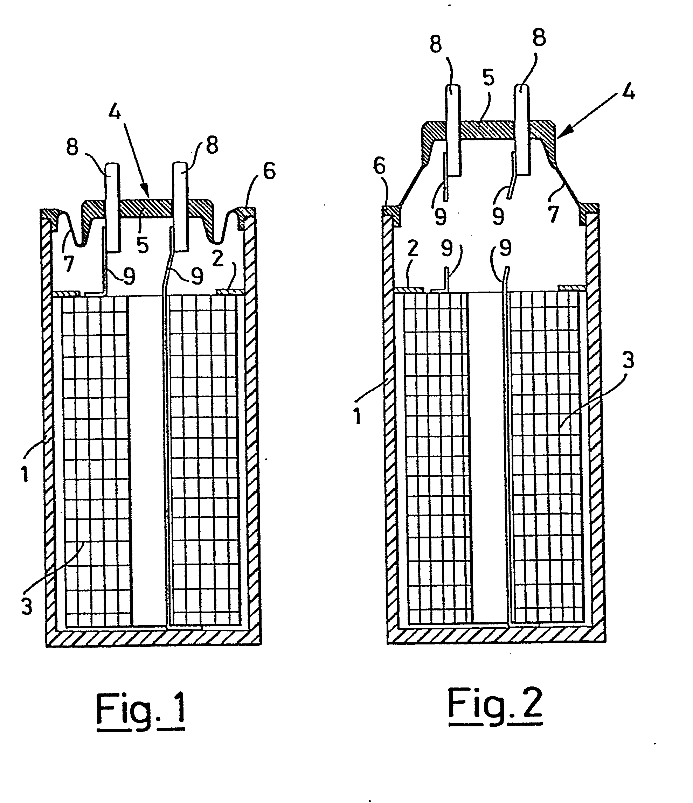

Container 1 is hermetically closed by a cover 4, also formed of a plastics material and composed of a central portion 5, a peripheral portion 6 and an intermediate portion 7. Peripheral portion 6 is affixed to the open end of container 1 in a per se known manner. Embedded in central portion 5 is a pair of terminals 8 with supply conductors 9 for capacitor 3 affixed thereto. Intermediate portion 7 is formed as an annular wall portion or web of reduced wall thickness as compared to portions 5 and 6, whereby it is deformable to permit central portion 5 of cover 4 to move away from container 1 in an axial direction, as evident from comparison of figs. 1 and 2.

Under normal operating conditions of capacitor 3, cover 4 is in its original shape shown in fig. 1, with supply conductors 9 being tensioned to a limited degree between terminals 8 and the terminals of the capacitor itself.

In case of a short circuit, the discharge current of the capacitor causes the dielectric to decompose, resulting in the generation of a gas.This leads to the buildup of an overpressure within the hermetically sealed container 1 , causing intermediate portion 7 of cover 4 to be deformed so as to permit central portion 5 to be axially displaced to the position shown in fig. 2. As a result, at least one of supply conductors 9 is broken so as to interrupt the supply circuit of capacitor 3.

It is to be noted that, although the preceding description is essentially directed to the employ of the device according to the invention for a capacitor of the type comprising a dielectric formed of propylene or another synthetic material and metallized electrode layers, the described device is likewise efficiently applicable to other types of capacitors formed for instance of metallized paper or other materials.

**0093455**

GRUNECKER, KINKELDEY, STOCKMAIR & PARTNER

PATENTANWÄLTE
EUROPEAN PATENT ATTORNEYS

A GRUNECKER. DIPL ING
DR H KINKELDEY. DIPL ING
DR W STOCKMAIR DIPL ING. AE E ICALTECH
DR K SCHUMANN. DIPL PHYS
P H JAKOB DIPL ING
DR G BEZOLD DIPL -CHEM
W MEISTER. DIPL ING
H HILGERS. DIPL ING
DR H MEYER-PLATH. DIPL ING

8000 MÜNCHEN 22
MAXIMILIANSTRASSE 43

EP 976

Device for Automatically Disconnecting an Electric
Capacitor in the Case of a Short Circuit

Patent Claims

1.    A device for automatically disconnecting an electric capacitor in the case of a short circuit, comprising a container for housing said capacitor therein, a cover for hermetically closing said container, terminals extending through said cover and rigidly connected thereto, and supply conductors extending between said terminals and said capacitor within said container,  characterized in that said cover (4) includes a central portion (5) carrying said terminals (8), a peripheral portion (6) affixed to said container (1), and  a deformable intermediate portion (7) adapted to permit said central portion to move away from said container in an axial direction in the case of an overpressure within said container.

2. A device according to claim 1, characterized in that said container (1) is formed of a plastics material.

3. A device according to claim 1 and/or 2, characterized in that said cover (4) is formed of a plastics material, said deformable intermediate portion (7) being formed as an annular web having a reduced wall thickness as compared to said central portion (5) and said peripheral portion (6).

0093455

Fig. 1

Fig. 2